# FASCICULE DE BREVET EUROPEEN

(11) **EP 0 477 054 B1**
(45) Date de publication et mention de la délivrance du brevet: **30.11.1994**
(21) Numéro de dépôt: 91402328.8
(22) Date de dépôt: 28.08.1991
(51) Int. Cl.: H02K 3/50, H02K 29/00, H02K 11/00

(54) **Moteur électrique à commutation électronique à structure complexe**
Einen komplexen Aufbau aufweisender elektrischer Motor mit elektronischer Kommutation
Electric motor with electronic commutation having a complex structure

(30) Priorité: 21.09.1990 FR 9011702
(43) Date de publication de la demande: 25.03.1992
(73) Titulaire: ECIA - EQUIPEMENTS ET COMPOSANTS POUR L'INDUSTRIE AUTOMOBILE, F-25400 Audincourt (FR)
(72) Inventeur: Escaravage, Gérard, F-25700 Valentigney (FR)
(74) Mandataire: Moncheny, Michel

(56) Documents cités:
- GB-A- 596 115
- PATENT ABSTRACTS OF JAPAN, vol. 12, no. 187 (E-615)(3034) 31 Mai 1988 ; & JP-A-62 290 343

## Description

La présente invention concerne les moteurs électriques à commutation électronique et vise plus particulièrement la structure de ces derniers.

Comme on le sait, les moteurs à commutation électronique se composent, entre autres, d'un carter qui contient un induit bobiné et d'où sort un arbre. Les moyens de commutation de cet induit au lieu d'être constitués par un dispositif électromécanique fait d'un collecteur et de balais sont, dans ce cas, un dispositif électronique avec un module de commande.

Ce type de moteurs pose habituellement un délicat problème de fabrication, de construction et d'assemblage. En effet, il faut procéder à la confection des bobinages qui doivent être logés dans des évidements de l'induit puis il faut assurer la jonction des bouts des fils des bobinages de cet induit avec le circuit électronique du module de commande et, enfin, il faut pouvoir dissiper la chaleur des composants de puissance du circuit électronique du module de commande.

Pour assurer la jonction des bouts des fils des bobinages avec le circuit électronique du module de commande on procède, habituellement, par soudage des bouts de fil à des cosses qui sont associées au circuit électronique. La plupart du temps, compte tenu de la configuration de la structure du moteur, un tel soudage ne peut être fait que manuellement. Dans des moteurs relativement classiques à montage en étoile, il faut procéder à de nombreuses soudures puisque les bobinages de l'induit sont multiples et que chaque bobinage nécessite deux soudures. Une telle opération, qu'il est tout particulièrement difficile d'automatiser, n'est habituellement faite que manuellement; elle nécessite donc une très grande habileté et demande du temps. De plus, quelle que soit l'habileté de l'opérateur, les soudures sont sujettes à des défauts de contact. Par exemple, ces soudures peuvent être dites "sèches", c'est-à-dire que le décapant du flux de soudure isole en fait le fil de la cosse au lieu d'assurer la continuité électrique.

Pour résoudre un autre aspect du problème, on utilise souvent pour le dispositif électronique un substrat isolant qui porte un circuit imprimé conducteur sur lequel sont posés, fixés et connectés les composants du circuit électronique du module de commande. Un tel substrat, après avoir été équipé, est habituellement placé à proximité d'un des flasques d'extrémité du carter du moteur et, de préférence, au voisinage de sa face interne. Toutefois, ce circuit comportant des composants de puissance qu'il faut refroidir afin d'éviter leur échauffement qui serait destructeur, on fait en sorte que le substrat isolant est transpercé d'orifices et que les composants de puissance sont fixés directement sur le flasque du moteur, au travers de ses orifices; de la sorte ce flasque de par sa masse et de par sa nature métallique sert de radiateur pour évacuer les calories produites dans les composants de puissance au cours du fonctionnement. Le fait d'avoir à scinder le circuit électronique de manière que certains de ces composants ne soient plus sur le substrat lui-même mais montés directement sur un flasque impose des opérations supplémentaires de mise en place, de fixation et ensuite de raccordement électrique par soudage de ces composants au circuit imprimé du substrat. On imagine facilement que ceci complique aussi les opérations de montage et d'assemblage et est aussi source de malfaçons.

Un autre aspect des difficultés est lié à la confection des bobinages de l'induit lorsqu'on désire procéder automatiquement et que les évidements de l'induit ne permettent pas de préfabriquer ces bobinages pour qu'ils aient seulement à y être déposés. Dans un tel cas, en particulier si l'on veut pouvoir procéder mécaniquement ou automatiquement, il faut faire appel à une enrouleuse munie d'un bras articulé tournant autour d'un axe qui est alimenté en fil par un dévidoir qui le prélève dans une réserve. Ce bras décrit une trajectoire relativement complexe pour, au fur et à mesure du déroulement du fil, le conformer en boucles qui sont successivement déposées dans les évidements. Pour pouvoir opérer de la sorte, il faut donc que l'induit soit relativement bien dégagé, libre d'accès, de manière à ne pas entraver la course du bras articulé tournant, en particulier par la présence de contacteurs qui recevront les bouts des fils de chaque bobinage.

Une technique qui permet de résoudre certaines des difficultés énumérées précédemment est, par exemple, exposée dans le document FR-A- 2651933 déposé le 8 septembre 1989 au nom de la Demanderesse. Toutefois, la technique qui y est exposée ne permet pas de procéder à un bobinage, à une connection puis à un assemblage automatiques.

Le but de l'invention est de remédier pratiquement à l'ensemble de ces difficultés grâce à un moteur à commutation électronique à structure améliorée.

L'invention a pour objet un moteur à commutation électronique constitué, entre autres, d'un carter avec un corps, de flasques destinés à recevoir au moins un palier, d'un arbre monté dans le ou les paliers, d'un induit bobiné, de moyens de commutation avec un connecteur constitué d'un support isolant destiné à être porté par l'induit et de contacteurs conducteurs munis de cosses pour recevoir les bouts des fils des bobinages de l'induit et de plots destinés à venir au contact chacun de contre-plots correspondants d'un circuit imprimé et avec un module de commande fait d'un substrat isolant qui porte ce circuit imprimé destiné à recevoir des composants y compris ceux de puissance de circuits électroniques et qui est directement appliqué et maintenu en contact intime contre la face intérieure d'un flasque, et dans lequel ce support isolant est monté sur cet arbre, ce support isolant et cet arbre sont munis d'un détrompeur qui n'autorise qu'une seule orientation en rotation et fixe cette dernière et qui assure aussi l'orientation relative en rotation de ces plots et contre-plots tout en permettant un coulissement axial relatif de ces support isolant et arbre et où ce coulissement axial relatif est possible au moins jusqu'à la fin de l'opération de fixation des bouts des fils des bobinages aux cosses. Ce moteur est caractérisé en ce que le support isolant porte à sa périphérie une couronne médiane bordée de part et d'autre de bordures latérales de diamètre moindre, en ce que cette couronne est aménagée pour former des dents dont le profil au moins à proximité du fond de chaque intervalle qui les sépare présente une partie en retrait, en ce que chaque bordure est pourvue d'encoches disposées à l'aplomb des dents, en ce que les cosses et les plots sont réunis par des échelons centraux avec deux ailes qui sont destinées à être engagés chacun dans les intervalles de manière que chaque aile puisse être appliquée contre une partie en retrait, et en ce que chaque échelon porte deux barrettes marginales qui sont destinées à être engagées chacune dans les encoches.

D'autres caractéristiques de l'invention apparaîtront à la lecture de la description et des revendications qui suivent ainsi qu'à l'examen du dessin annexé, donné seulement à titre d'exemple, où :

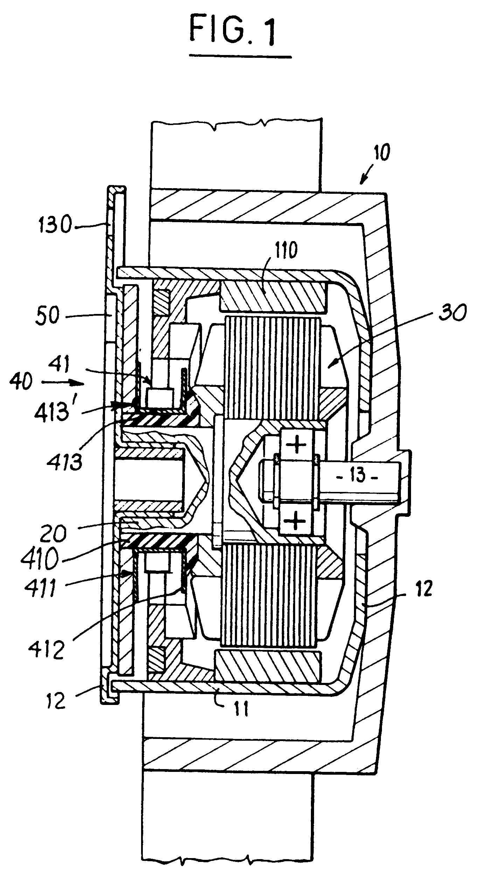

- la Figure 1 est une coupe méridienne axiale d'un moteur selon l'invention;

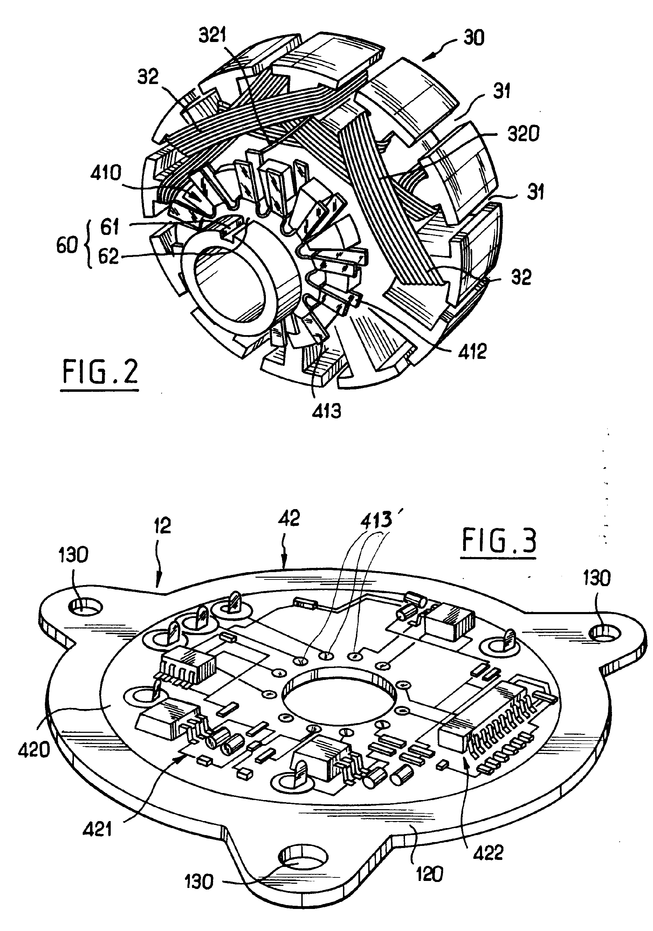

- la Figure 2 est une vue perspective de l'induit terminé prêt à être réuni au flasque de la Figure 3 ;
- la Figure 3 est une vue perspective partielle d'un flasque équipé de son module de commande ;

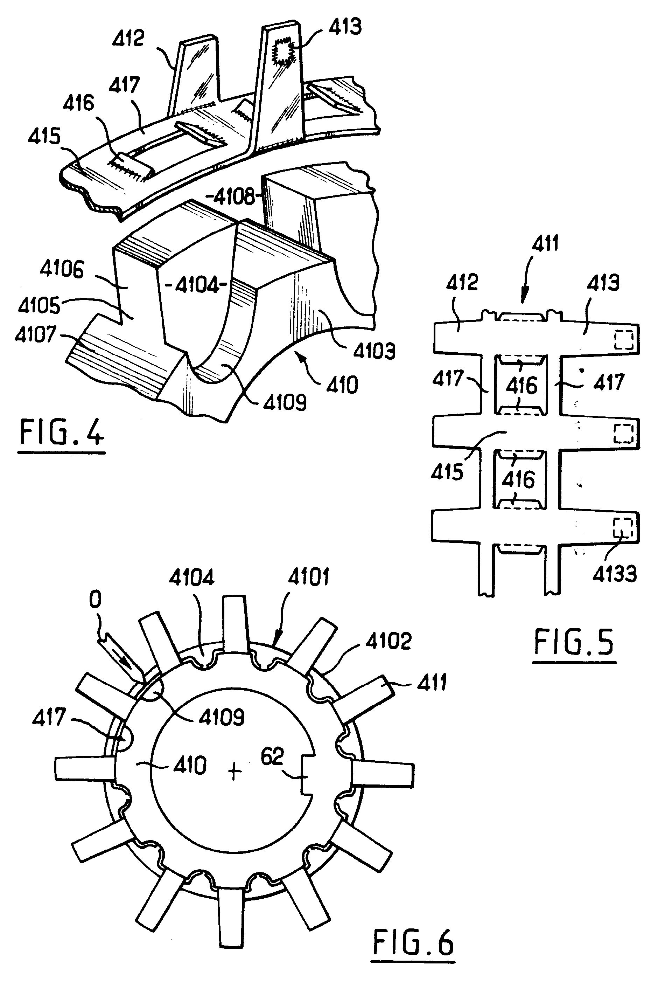

- la Figure 4 est une vue de détail partielle en perspective éclatée d'un connecteur selon l'invention ;
- la Figure 5 est une autre vue de détail d'un constituant de ce connecteur ; et
- la Figure 6 est une vue en élévation d'un connecteur seul.

Les moteurs à commutation électronique étant bien connus dans la technique, seul sera décrit ce qui concerne directement ou indirectement l'invention. Pour le surplus, le spécialiste de la technique considèrée puisera dans les solutions classiques courantes à sa disposition pour faire face aux problèmes particuliers auxquels il est confronté.

Dans ce qui suit, on utilise toujours un même numéro de référence pour identifier un élément homologue quel que soit le mode de réalisation.

Comme on le voit en examinant les figures, un moteur à commutation électronique suivant l'invention comprend, entre autres, un carter 10, un arbre 20, un induit bobiné 30 associé à cet arbre, des moyens de commutation 40. Ce moteur est aussi équipé d'un bornier 50 pour le relier à une source d'énergie électrique, comme il est classique, ainsi que d'un détrompeur 60 dont on comprendra par la suite le rôle.

Pour la commodité de l'exposé, on décrira successivement chacun de ces constituants d'un moteur à commutation électronique selon l'invention.

Le carter 10 comprend un corps 11 approximativement cylindrique, et des flasques d'extrémité 12 relativement plans. L'un au moins de ces flasques porte des paliers 13, par exemple à billes, dont un seul est dessiné, comme il est classique.

Ce carter 10 reçoit l'arbre 20 et l'induit 30 bobiné. Cet arbre 20 est porté par le ou les paliers. Cet induit bobiné comprend des évidements 31 dans lesquels sont disposés des bobinages 32 faits d'un fil 320 dont les deux bouts 321 doivent être reliés à des cosses. Ceci est relativement classique. Dans le mode de réalisation particulier représenté, l'arbre et l'induit bobiné sont fixes alors qu'une partie de ce carter est, elle, mobile en rotation. Du fait de cette configuration, l'un des flasques n'est pas directement relié au corps de manière à pouvoir tourner avec un inducteur, par exemple des aimants permanents 110, qu'il porte; l'autre des flasques porte les moyens de commutation, l'induit et l'arbre et reste immobile, fixé qu'il est par exemple à l'aide de boulons, non dessinés, engagés dans des trous 130.

Les moyens de commutation 40 sont portés par l'un des flasques 12, ici par le flasque fixe auquel est aussi fixé le bornier 50.

Comme on le voit, les moyens de commutation 40 comprennent un connecteur 41 et un module de commande 42.

Le connecteur 41 comprend un support isolant 410 sur lequel sont placés des contacteurs 411 conducteurs. Chacun de ces contacteurs 411 comprend au moins une cosse 412 pour recevoir l'un des bouts 321 des fils 320 des bobinages 32 de l'induit, et un plot 413 destiné à venir au contact d'un contre-plot 413′ correspondant d'un circuit imprimé pour assurer la continuité électrique, comme on le comprendra par la suite. Ce connecteur forme en quelque sorte une fiche à broches multiples. Il est clair que plots et contre-plots peuvent être en totalité ou en partie, inversés ou permutés.

Le module de commande 42 est fait d'un substrat 420 isolant qui porte le dessin d'un circuit imprimé 421 conducteur destiné à recevoir des composants y compris les composants de puissance d'un circuit électronique 422. Comme on peut le voir, ce substrat 420 est appliqué directement contre la face intérieure 120 d'un flasque 12 et est maintenu en contact intime avec ce dernier de manière que le circuit imprimé et les composants soient apparents. Le substrat isolant est par exemple une feuille mince en résine polyimide dont l'une des faces est revêtue d'une couche de cuivre où par photogravure on a fait apparaître le réseau conducteur du circuit imprimé y compris s'il y a lieu les contre-plots 413′ et dont l'autre des faces est collée sur la face du flasque.

Lorsqu'on procède à la confection des bobinages 32 avec une enrouleuse mécanique, par exemple robotisée, il faut que son bras, articulé et tournant suivant un axe, puisse suivre au moins deux évidements 31 successifs pour y déposer des spires de fil 320. Pour confectionner les bobinages, il faut donc que ce bras ne soit pas entravé dans sa course, en particulier par les contacteurs 411 qui recevront les bouts 321 du fil 320 auxquels ils seront soudés, brasés, sertis à chaud, ou raccordés électriquement de toute autre manière courante classique.

Pour permettre ce dégagement, au moins momentané, de l'induit 30 et faciliter la confection automatique des bobinages 32, on utilise un connecteur 41 qui comprend un support isolant 410 en couronne qui est enfilé sur l'arbre 20 de manière à pouvoir y coulisser sans pour autant pouvoir tourner par rapport à ce dernier. Pour ce faire, on utilise un détrompeur 60 qui n'autorise qu'une seule orientation relative en rotation et fixe cette dernière tout en permettant un coulissement axial relatif de ces support isolant 410 et arbre 20. Ce détrompeur assure donc une mise en repérage biunivoque des contacteurs avec des bobinages particuliers et aussi un repérage qui permettra ultérieurement la mise en correspondance correcte des plots 413 et contre-plots 413′. Ce détrompeur 60 est fait d'éléments mâles 62 et d'éléments femelles 61 complémentaires, par exemple du type rainure-languette. Dans le mode de réalisation illustré, la rainure est pratiquée sur l'arbre 20, par exemple sous la forme d'une saignée périphérique axiale alors que la languette est portée par le support isolant 410 en couronne, par exemple sous la forme d'une protubérance saillante radiale à la périphérie intérieure et dont le profil de la section droite est complémentaire de celui de celle de cette saignée.

Il est clair que cette configuration du détrompeur n'est pas la seule utilisable. Ce détrompeur peut utiliser le nombre de paires de pôles du moteur, leurs symétries éventuelles pour en tirer partie afin, par exemple, de ne pas se servir d'une répartition uniforme des plots et contre-plots ou d'une distribution régulière de plots et contre-plots mâles et femelles.

Comme on peut l'observer sur les figures du dessin, le support isolant 410 a une configuration torique. Le support isolant 410 porte à sa périphérie 4101 extérieure une couronne 4102 médiane qui est bordée, de part et d'autre, de bordures 4103 latérales. Le diamètre propre de chacune des bordures 4103 est moindre que celui de la couronne 4102. La couronne 4102 est aménagée pour former des dents 4104 dont les profils 4106, au moins à proximité du fond 4107 de chaque intervalle 4108 qui les sépare, présentent une partie en retrait 4105. Chacune des deux bordures 4103 est pourvue d'encoches 4109 disposées à l'aplomb des dents 4104. Comme on peut l'observer, la distance minimale entre deux profils 4106 en vis-à-vis qui sont séparés par un intervalle 4108, est inférieure à la distance minimale entre deux parties en retrait 4105 en vis-à-vis qui sont séparées par ce même intervalle.

Les dents et encoches sont ou ne sont pas régulièrement réparties; toutefois, de préférence elles sont équidistantes.

Comme on le voit, les cosses 412 et les plots 413 sont réunis par des échelons 415 centraux chacun avec deux ailes 416, et portent deux barrettes 417 marginales. Comme on peut l'observer, à l'état initial les cosses 412 et les plots 413 avec leurs échelons 415 et leurs barrettes 417 forment une bande continue où les cosses et plots forment de chaque côté une sorte de peigne et les échelons forment au milieu une sorte d'échelle.

Chaque échelon 415 est muni de deux ailes 416 qui sont destinées à être engagées dans un intervalle 4108 de manière que chaque aile 416 puisse être appliquée contre une partie en retrait 4105 qui lui fait face. Les barrettes 417 sont, elles, destinées à être engagées chacune dans une encoche 4109 qui lui est contiguë.

Comme on peut l'observer, avant engagement d'un échelon 415 dans un intervalle 4108 la largeur des ailes 416 est de préférence inférieure à la distance minimale entre deux profils 4106 en vis-à-vis qui sont séparés par un intervalle 4108. Après engagement, cette largeur est au moins égale à la distance minimale entre deux parties en retrait 4105 en vis-à-vis qui sont séparées par un intervalle 4108.

Comme on peut l'observer, avant engagement dans les encoches 4109 les barrettes 417 sont convexes alors qu'après engagement dans les encoches 4109 elles sont concaves.

Comme on peut l'observer, initialement, lorsque les barrettes 417 sont convexes, elles assurent la continuité mécanique et électrique entre deux cosses 412 successives et deux plots 413 successifs. Ultérieurement, lorsque les barrettes 417 sont concaves, elles n'assurent plus cette continuité électrique au moins et, de préférence, n'assurent plus ni cette continuité électrique ni cette continuité mécanique.

Lorsque les ailes 416 sont engagées dans les parties en retrait 4105 correspondantes elles contribuent au maintien en place radial des cosses 412 et plots 413 sur le support isolant 410. Lorsque les barrettes 417 sont engagées dans les encoches 4109 elles contribuent au maintien en place axial des cosses 412 et plots 413 sur le support isolant 410.

Afin d'assurer un bon contact électrique entre les plots 413 et les contre-plots 413′, les plots 413 sont pliés avec un angle inférieur à 90° de manière à leur conserver une certaine souplesse. De préférence et s'il y a lieu, pour parfaire la continuité électrique, les plots 413 sont pourvus chacun d'une dépression 4133 qui est destinée à recevoir une pâte conductrice apte à venir au contact des contre-plots 413′.

La bande en forme d'échelle à peigne double que constituent les cosses 412 et les plots 413 avec les échelons 415 et les barrettes 417 initialement continue est par exemple d'abord découpée à la longueur de la circonférence des fonds des intervalles contre lesquels reposeront les échelons. Ensuite, cette bande est introduite dans les intervalles et cintrée à mesure pour épouser les fonds des intervalles. Les ailes des échelons sont alors déployées de manière à pénétrer dans les parties en retrait. Simultanément ou postérieurement, les barrettes qui avaient donc une configuration convexe du fait du cintrage de la bande sont déformées pour être rendues concaves et simultanément interrompre la continuité électrique et au besoin aussi interrompre la continuité mécanique par rupture. Pour ce faire les barrettes sont de préférence frangibles.

Ces barrettes contribuent donc avec les ailes à l'immobilisation des plots et des cosses : les barrettes emprisonnent latéralement les pieds des dents de la couronne médiane et les ailes sont encastrées dans les parties en retrait des profils des dents.

Dans le mode de réalisation illustré, les parties en retrait donnent aux intervalles et aux dents une configuration en queue d'aronde.

Suivant la nature du matériau dont est faite la bande initiale et le profil exact des dents, les échelons peuvent être engagés dans les intervalles et y demeurer simplement par déformation élastique des ailes. Si le matériau n'a pas l'élasticité suffisante, les ailes sont déployées mécaniquement à l'aide d'un outil O approprié.

De préférence, seules les cosses sont repliées avant le bobinage de l'induit alors que les plots le sont ultérieurement afin de ne pas gêner les évolutions du bras de l'enrouleuse.

Le support isolant est par exemple confectionné par moulage d'une matière synthétique.

On comprend tout l'intérêt de la solution apportée par l'invention puisque le connecteur 41 assure à lui seul la jonction entre les bobinages de l'induit 30 et les moyens de commutation 40.

On saisit donc que le connecteur selon l'invention joue le rôle d'une interface entre les points d'accrochage des bouts des fils des bobinages lors du processus de bobinage, et le circuit électronique tout en garantissant une liaison électrique, un repérage angulaire des entrées et sorties des bobinages par rapport au circuit électronique du fait de l'existence du détrompeur qui autorise un déplacement axial, au moins momentané, du support isolant pour permettre les déplacements du bras d'une enrouleuse.

Grâce à l'invention, il est possible de fabriquer industriellement et automatiquement un moteur électrique à commutation électronique. De par l'existence du détrompeur, il est aussi possible d'assurer une mise en registre des flans de tôle de l'induit pour favoriser leur empilage correct, bien orienté. Le support isolant est mis en place et maintenu initialement à l'écart du paquet de tôles lors de la confection des bobinages. Lorsque ces derniers sont terminés, les bouts du fil de chacun d'eux sont reliés électriquement aux cosses par soudage par exemple avec un flux d'étain, soudage électrique ou de toute autre manière. Puis le support isolant est repoussé contre les tôles de l'induit afin de réduire l'encombrement de l'ensemble. La solution suivant l'invention permet d'utiliser un arbre dont la longueur de la partie saillante ne dépasse pas la moitié, environ, de son diamètre extérieur alors que pour les moteurs traditionnels cette longueur excède habituellement une fois et demie environ ce diamètre. Il suffit alors d'approcher l'induit bobiné du module de commande équipé de ses contre-plots en utilisant toujours le détrompeur : ceci permet aux plots et contre-plots de s'aligner et de s'engager les uns contre les autres d'une manière unique, et sans hésitation possible grâce au rôle joué par le détrompeur. On saisit donc que cette dernière opération peut aussi être faite automatiquement à l'aide d'un robot ou d'un automate programmable.

On perçoit donc tout l'intérêt que présente un moteur à commutation électronique suivant l'invention puisqu'il permet une fabrication industrielle grandement automatisée.

Un moteur électrique à commutation électronique à structure complexe selon l'invention convient particulièrement bien aux ventilateurs du type de ceux utilisés par exemple dans les automobiles. Dans un tel cas, le carter avec son corps sont constitués par un "bol" associé à l'hélice du ventilateur qui vient coiffer le rotor du moteur. Cette hélice est emmanchée sur l'arbre qui sert à la solidarisation de l'ensemble.

## Revendications

1. Moteur à commutation électronique constitué, entre autres, d'un carter (10) avec un corps (11), de flasques (12) destinés à recevoir au moins un palier (13), d'un arbre (20) monté dans le ou les paliers, d'un induit bobiné (30), de moyens de commutation (40) avec un connecteur (41) constitué d'un support isolant (410) destiné à être porté par l'induit (30) et de contacteurs (411) conducteurs munis de cosses (412) pour recevoir les bouts (321) des fils (320) des bobinages (32) de l'induit (30) et de plots (413) destinés à venir au contact chacun de contre-plots (413′) correspondants d'un circuit imprimé (421) et avec un module de commande (42) fait d'un substrat (420) isolant qui porte ce circuit imprimé (421) destiné à recevoir des composants y compris ceux de puissance de circuits électroniques (422) et qui est directement appliqué et maintenu en contact intime contre la face intérieure d'un flasque (12), et dans lequel ce support isolant (410) est monté sur cet arbre (20), ce support isolant (410) et cet arbre (20) sont munis d'un détrompeur (60) qui n'autorise qu'une seule orientation en rotation et fixe cette dernière et assure aussi l'orientation relative en rotation de ces plots (413) et contre-plots (413′) tout en permettant un coulissement axial relatif de ces support isolant (410) et arbre (20) et où ce coulissement axial relatif est possible au moins jusqu'à la fin de l'opération de fixation des bouts (321) des fils (320) des bobinages (32) aux cosses (412), moteur caractérisé en ce que le support isolant (410) porte à sa périphérie (4101) une couronne (4102) médiane bordée de part et d'autre de bordures (4103) latérales de diamètre moindre, en ce que cette couronne (4102) est aménagée pour former des dents (4104) dont le profil (4106) au moins à proximité du fond (4107) de chaque intervalle (4108) qui les sépare présente une partie en retrait (4105), en ce que chaque bordure (4103) est pourvue d'encoches (4109) disposées à l'aplomb des dents (4104), en ce que les cosses (412) et les plots (413) sont réunis par des échelons (415) centraux avec deux ailes (416) qui sont destinés à être engagés chacun dans les intervalles (4107) de manière que chaque aile (416) puisse être appliquée contre une partie en retrait (4105), et en ce que chaque échelon (415) porte deux barrettes (417) marginales qui sont destinées à être engagées chacune dans les encoches (4109).

2. Moteur selon la revendication 1, caractérisé en ce que la largeur des ailes (416) avant engagement d'un échelon (415) dans un intervalle (4107) est de préférence inférieure à la distance minimale entre deux profils (4106) en vis-à-vis qui sont séparés par un intervalle (4108) et en ce que cette largeur après engagement est au moins égale à la distance minimale entre deux parties en retrait (4105) en vis-à-vis qui sont séparées par un intervalle (4107) afin de contribuer au maintien en place de ces cosses et plots.

3. Moteur selon la revendication 1 ou 2, caractérisé en ce que les barrettes (417) sont convexes avant engagement dans les encoches (4109) et concaves après engagement.

4. Moteur selon la revendication 3, caractérisé en ce que les barrettes (417) lorsqu'elles sont convexes, assurent la continuité mécanique et électrique entre deux cosses (412) successives et deux plots (413) successifs et en ce que les barrettes (417) lorsqu'elles sont concaves n'assurent plus cette continuité électrique au moins et contribuent au maintien en place de ces cosses et plots.

5. Moteur selon l'une quelconque des revendications 1 à 4, caractérisé en ce que l'extrémité des plots (413) est pliée avec un angle inférieur à 90° de manière à leur conserver de la souplesse pour assurer un bon contact électrique avec les contre-plots (413′).

6. Moteur selon la revendication 5, caractérisé en ce que l'extrémité pliée des plots (413) est pourvue d'une dépression (4133) destinée à recevoir une pâte conductrice apte à venir au contact des contre-plots (413′).

7. Moteur selon l'une quelconque des revendications 1 à 6, caractérisé en ce que les cosses (412), plots (413), échelons (415) et barrettes (417) forment une bande continue au moment de leur mise en place sur le support isolant (410).

## Patentansprüche

1. Motor mit elektronischer Kommutation, der unter anderem gebildet wird durch ein Gehäuse (10) mit einem Korpus (11), Lagerschilde (12), die zur Aufnahme wenigstens eines Lagers (13) bestimmt sind, eine in dem Lager oder den Lagern montierte Welle (20), einen gewickelten Läufer (30), Kommutationsmittel (40) mit einem Verbinder (41), der gebildet wird durch einen isolierenden Träger (410), der dazu bestimmt ist, durch den Läufer (30) gehalten zu werden, und leitende Kontakte (411), die mit Kabelschuhen (412) zur Aufnahme der Enden (321) von Drähten (320) der Wicklungen (32) des Läufers (30) und Steckern (413) versehen sind, die jeweils für den Kontakt mit entsprechenden Gegensteckern (413′) einer gedruckten Schaltung (421) bestimmt sind, und mit einem Steuermodul (42), das hergestellt ist aus einem isolierenden Substrat (420), das die zur Aufnahme der Bauelemente einschließlich der Leistungsbauelemente von elektronischen Schaltungen (422) dienende gedruckte Schaltung (421) trägt und direkt an der Innenfläche eines Lagerschildes (12) anliegt und mit dieser in enger Berührung gehalten wird und in welchem der isolierende Träger (410) auf der Welle (20) montiert ist, wobei der isolierende Träger (410) und die Welle (20) mit einer Unverwechselbarkeitseinrichtung (60) versehen sind, die nur eine einzige Drehorientierung zuläßt und die letztere fixiert und außerdem die relative Drehorientierung der Stecker (413) und Gegenstecker (413′) sicherstellt, wobei ein relatives axiales Gleiten des isolierenden Trägers und der Welle (20) zugelassen wird und dieses relative axiale Gleiten wenigstens bis zum Abschluß des Vorgangs der Befestigung der Enden (321) der Drähte (320) der Wicklungen (32) an den Kabelschuhen (412) möglich ist, welcher Motor dadurch gekennzeichnet ist, daß der isolierende Träger (410) an seinem Umfang (4101) einen Median-Kranz (4102) trägt, der auf beiden Seiten von seitlichen Einfassungen (4103) mit kleinerem Durchmesser begrenzt ist, daß dieser Kranz (4102) Zähne (4104) bildet, deren Profil (4106) wenigstens in der Nähe des Grundes (4107) jedes sie trennenden Intervalls (4108) einen zurückspringenden Bereich (4105) bildet, daß jede Einfassung (4103) mit fluchtend zu den Zähnen (4104) angeordneten Kerben (4109) versehen ist, daß die Kabelschuhe (412) und die Stecker (413) durch Mittelsprossen (415) mit zwei Flügeln (416) verbunden sind, die dazu bestimmt sind, jeweils derart in die Intervalle (4107) einzugreifen, daß jeder Flügel (416) gegen einen zurückspringenden Bereich (4105) angedrückt werden kann, und daß jede Sprosse (415) zwei Randstege (417) trägt, die dazu bestimmt sind, jeweils in die Kerben (4109) einzugreifen.

2. Motor nach Anspruch 1, dadurch gekennzeichnet, daß die Breite der Flügel (416) vor dem Eingriff einer Sprosse (415) in ein Intervall (4107) vorzugsweise kleiner ist als der minimale Abstand zwischen zwei gegenüberliegenden Profilen (4106), die durch ein Intervall (4108) getrennt sind, und daß diese Breite nach dem Eingriff wenigstens gleich dem minimalen Abstand zwischen zwei gegenüberliegenden zurückspringenden Bereichen (4105) ist, die durch ein Intervall (4107) getrennt sind, um dazu beizutragen, die Kabelschuhe und Stecker in Position zu halten.

3. Motor nach Anspruch 1 oder 2, dadurch gekennzeichnet, daß die Stege (417) vor dem Eingriff in die Kerben (4109) konvex und nach dem Eingriff konkav sind.

4. Motor nach Anspruch 3, dadurch gekennzeichnet, daß die Stege (417), wenn sie konvex sind, die mechanische und elektrische Verbindung zwischen zwei aufeinanderfolgenden Kabelschuhen (412) und zwei aufeinanderfolgenden Steckern (413) gewährleisten, und daß die Stege (417), wenn sie konkav sind, wenigstens nicht mehr diese elektrische Verbindung gewährleisten und dazu beitragen, die Kabelschuhe und Stecker in Position zu halten.

5. Motor nach einem der Ansprüche 1 bis 4, dadurch gekennzeichnet, daß das Ende der Stecker (413) unter einem Winkel von weniger als 90° derart abgewinkelt ist, daß ihre Nachgiebigkeit erhalten bleibt, um einen guten elektrischen Kontakt mit den Gegensteckern (413′) zu gewährleisten.

6. Motor nach Anspruch 5, dadurch gekennzeichnet, daß das abgewinkelte Ende der Stecker (413) mit einer Vertiefung (4133) versehen ist, die dazu bestimmt ist, eine mit den Gegensteckern (413′) in Kontakt bringbare Leitpaste aufzunehmen.

7. Motor nach einem der Ansprüche 1 bis 6, dadurch gekennzeichnet, daß die Kabelschuhe (412), Stecker (413), Sprossen (415) und Stege (417) im Augenblick ihrer Anbringung auf dem isolierenden Träger (410) ein durchgehendes Band bilden.

## Claims

1. Motor with electronic commutation constituted, inter alia, by a casing (10) with a body (11), by flanges (12) intended to receive at least one bearing (13), by a shaft (20) mounted in the bearing(s), by a wound armature (30), by commutation means (40) with a connector (41) constituted by an insulating support (410) intended to be carried by the armature (30) and by conducting contactors (411) equipped with terminals (412) in order to receive the ends (321) of the wires (320) of the windings (32) of the armature (30) and with contacts (413) intended to make contact with each of the corresponding counter-contacts (413′) of a printed circuit (421) and with a control module (42) made of an insulating substrate (420) which carries this printed circuit (421) intended to receive components, including those which are power components of electronic circuits (422) and which is directly applied and held in intimate contact against the internal face of a flange (12), and in which this insulating support (410) is mounted on this shaft (20), this insulating support (410) and this shaft (20) being supplied with a polarising slot (60) which allows only a single orientation in rotation and fixes the latter and which also ensures the relative orientation in rotation of these contacts (413) and counter-contacts (413′) whilst permitting a relative axial sliding of this insulating support (410) and this shaft (20) and where this relative axial sliding is possible, at least until the end of the operation of fixing the ends (321) of the wires (320) of the windings (32) to the terminals (412), which motor is characterised in that the insulating support (410) carries on its periphery (4101) a median ring (4102) edged on either side with lateral borders (4103) of lesser diameter, in that this ring (4102) is caused to form teeth (4104) whose profile (4106), at least close to the bottom (4107) of each space (4108) which separates them, exhibits a recessed portion (4105), in that each border (4103) is Provided with notches (4109) disposed in vertical line with the teeth (4104), in that the terminals (412) and the contacts (413) are joined together by central rungs (415) with two wings (416) which are each intended to be engaged into the space widths (4107) in such a manner that each wing (416) can be applied against a recessed portion (4105), and in that each rung (415) carries two marginal small bars (417) which are each intended to be engaged into the notches (4109).

2. Motor according to Claim 1, characterised in that the width of the wings (416) before engagement of a rung (415) in a space width (4107) is preferably less than the minimum distance between two opposing profiles (4106) which are separated by space width (4108) and in that this width after engagement is at least equal to the minimum distance between two opposing recessed portions (4105) which are separated by a space width (4107) so as to contribute to the retention of these terminals and contacts.

3. Motor according to Claim 1 or 2, characterised in that the small bars (417) are convex before engagement into the notches (4109) and are concave after engagement.

4. Motor according to Claim 3, characterised in that the small bars (417), when they are convex, ensure the mechanical and electrical continuity between two successive terminals (412) and two successive contacts (413) and in that the small bars (417), when they are concave, no longer ensure this electrical continuity at least and contribute to the retention of these terminals and contacts.

5. Motor according to one of Claims 1 to 4, characterised in that the end of the contacts (413) is bent at an angle less than 90° in such a manner as to keep their flexibility in order to ensure a good electrical contact with the counter-contacts (413′).

6. Motor according to Claim 5, characterised in that the bent end of the contacts (413) is provided with a depression (4133) intended to receive a conductive paste able to come into contact with the counter-contacts (413′).

7. Motor according to one of Claims 1 to 6, characterised in that the terminals (412), contacts (413), rungs (415) and small bars (417) form a continuous strip at the time they are put into position on the insulating support (410).
